# EUROPÄISCHE PATENTSCHRIFT

(11) **EP 2 697 328 B1**
(45) Veröffentlichungstag und Bekanntmachung des Hinweises auf die Patenterteilung: **19.07.2017**
(21) Anmeldenummer: 12713964.0
(22) Anmeldetag: 05.04.2012
(51) Int. Cl.: C09J 163/00

(54) **SCHLAGZÄHMODIFIZIERTE KLEBSTOFFE**
IMPACT-MODIFIED ADHESIVES
ADHÉSIFS À RÉSILIENCE MODIFIÉE

(30) Priorität: 12.04.2011 DE 102011007187; 21.04.2011 DE 102011007897
(43) Veröffentlichungstag der Anmeldung: 19.02.2014
(73) Patentinhaber: Henkel AG & Co. KGaA, 40589 Düsseldorf (DE)
(72) Erfinder: RENKEL, Martin, 40215 Düsseldorf (DE); BARRIAU, Emilie, Laguna Niguel, CA 92677 (US); HORNUNG, Martin, 69120 Heidelberg (DE); SCHÖNFELD, Rainer, 40627 Düsseldorf (DE)
(86) Internationale Anmeldenummer: PCT/EP2012/056312
(87) Internationale Veröffentlichungsnummer: WO 2012/139974

(56) Entgegenhaltungen:
- EP-A1- 2 110 397
- WO-A1-96/11240
- US-A- 4 578 424
- US-A- 4 740 539
- US-A1- 2010 204 410

## Beschreibung

Die vorliegende Erfindung betrifft thermisch härtbare Epoxidharz-Klebstoffe, die Precursor eines Schlagzähigkeitsmodifikators enthalten, sowie ein Verfahren zu ihrer Herstellung. Dieses beinhaltet, dass man zwei Vormischungen herstellt, vermischt und gegebenenfalls nach Auftrag auf eine der zu fügenden Bauteile vorhärten lässt. Der Vorhärtungmechanismus beruht auf einer Polymerisationsreaktion reaktiver Cyanatharze; das sich in-situ bildende Polymernetzwerk modifiziert die Schlagzähigkeit des späteren Klebstoffs. Das endgültige Aushärten zum Klebstoff geschieht später beim Erwärmen aufgrund der thermisch induzierten Härtungsreaktion der Epoxidharz-Präpolymere.

Epoxid-basierte Harzsysteme werden seit langem erfolgreich als Klebstoffe oder Reparaturmassen für Konsumenten, Heimwerker und Handwerker sowie in der Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet. Härtbare Formulierungen, die Epoxid/Härter-Mischungen enthalten, eignen sich insbesondere als Strukturklebstoffe. Eine wichtige Eigenschaft des ungehärteten Harzsystems ist dessen Viskosität, die für die Handhabung und Verarbeitbarkeit bedeutend ist. Wichtige Materialeigenschaften der gehärteten Formulierungen sind hierbei unter anderem die Klebekraft (häufig als Zugscherfestigkeit bestimmt), das E-Modul, die Bruchdehnung und die Schlagschälfestigkeiten. Besonders hohe Anforderungen werden dabei an Klebstoffe gestellt, die wesentliche Komponenten eines Fahrzeugs zusammenhalten, und dabei auch in Unfallsituationen nicht versagen dürfen. Idealerweise weisen solche Klebstoffe ein derartiges Haftungsvermögen sowie eine derartige Schlagzähigkeit auf, dass beispielsweise die verklebten metallischen Bauteile durch den Aufprall deformiert werden, während die Klebefuge eine nur geringfügige Beschädigung erfährt und nicht spröde bricht.

Zur Optimierung dieser Eigenschaften wurde bereits der Zusatz verschiedener Verbindungsklassen im Stand der Technik beschrieben.

So wird beispielsweise in der WO 2007/025007 offenbart, einer Epoxidharzmischung Kautschuk-Partikel mit einer Kern-Schale-Struktur sowie einen weiteren Schlagzähigkeits-Modifizierer bzw. Zähigkeits-Verbesserer zuzugeben. Als Schlagzähigkeits-Modifizierer werden beispielsweise Polyurethane genannt, die sich von Hydroxyl-terminierten Polyoxyalkylenen, wie beispielsweise Polypropylenglykol oder Polytetrahydrofurandiol ableiten.

WO 2009/017690 beschreibt härbare Epoxidharz-basierte Klebstoffzusammensetzungen; die Zusammensetzungen enthalten in einer Ausführungsform zumindest ein Epoxidharz und zumindest ein Polyurethan.

WO 96/11240 A1 beschreibt einen Strukturklebstoff mit Haftklebereigenschaften ("pressure sensitive adhesive"), der insbesondere als Klebstoffstreifen vorliegt und verwendet wird. Der Strukturklebstoff enthält zwei unterschiedliche Polymertypen: ein telecheles Polymer (beispielsweise ein Polyol) und ein heterotelecheles Polymer, dessen eine Endgruppe mit derjenigen des telechelen Polymers übereinstimmt. Die andere Endgruppe des heterotelechelen Polymers kann beispielsweise eine Epoxidgruppe sein.

US 4 740 539 A beschreibt einen zweikomponentigen Strukturklebstoff bestehend aus einer Mischung von einer Epoxidkomponente und einer Härterkomponente, wobei die Epoxidkomponente einen Polyepoxid und einen Polyisocyanat, und die Härterkomponente ein Homopolymerisationskatalysator und ein Polyamin enthält.

Dennoch können die aus dem Stand der Technik bereits bekannten Methoden zur Verbesserung der Materialeigenschaften der ausgehärteten Systeme noch nicht alle Anforderungen vollständig erfüllen. Insbesondere erhöhen die aus dem Stand der Technik bekannten Schlagzähigkeitsverbesserer typischerweise die Viskosität der Anwendungszubereitungen, so dass ein höherer Aufwand bei der Verarbeitung betrieben werden muss (Applikation unter erhöhten Temperaturen und/oder hohen Drücken). Daher bestand nach wie vor ein Bedarf, Techniken zu entwickeln, die eine Optimierung der mechanischen Eigenschaften ermöglichen sowie sich durch eine verbesserte Handhabbarkeit auszeichnen.

Die vorliegende Erfindung schlägt eine Lösung dieses Problems vor. Anstelle beziehungsweise zusätzlich zu den Schlagzähigkeits-Modifikatoren des Standes der Technik wird in den erfindungsgemäßen Klebstoffsystemen im Rahmen der Vorhärtungsreaktion ein Polymernetzwerk, vorzugsweise ein Polyurethannetzwerk, in-situ gebildet. Auf diese Weise wird nicht nur die Schlagschälzähigkeit des resultierenden Epoxidklebstoffs verbessert, sondern es wird gleichzeitig möglich, die Vormischungen des Klebstoffs niedrigviskos zu formulieren und dementsprechend mit üblichen Techniken einfach zu verarbeiten. Ferner zeichnen sich die erfindungsgemäßen Systeme durch eine verbesserte Auswaschbeständigkeit während der Vorbehandlung- und Lackprozesse der Fügeteile, insbesondere der Karosserie im Automobilbau aus.

Die erfindungsgemäßen Klebstoffe eignen sich durch ihre besonderen Eigenschaften insbesondere als Klebstoffe für konstruktive Verklebungen, insbesondere im Automobil- und Flugzeugbau. Die erfindungsgemäßen Klebesysteme ermöglichen eine ausreichende Kraftübertragung zwischen den gefügten Bauteilen bei gleichzeitig ausreichender Flexibilität der Verklebung und sichern somit die Stabilität und/oder Funktionen der resultierenden Bauteile.

Ein erster Gegenstand der vorliegenden Erfindung ist daher ein Mittel zur Herstellung eines schlagzähmodifizierten Epoxidklebstoffs umfassend zumindest zwei getrennt voneinander konfektionierte Komponenten A und B, wobei
(a) die Komponente A mindestens eine Verbindung mit zwei oder mehreren Isocyanat-Gruppen sowie ein oder mehrere weitere Additive enthält,
(b) die Komponente B
   mindestens eine Verbindung, die mindestens zwei reaktive Gruppen, ausgewählt aus Hydroxygruppen und Thiolgruppen, aufweist und gleichzeitig frei von Epoxygruppen ist, sowie ein oder mehrere weitere Additive
   enthält,
(c) mindestens eine der Komponenten A oder B als Additiv mindestens ein Epoxid-Präpolymer enthält, das bei 22 °C flüssig ist,
(d) mindestens eine der Komponenten A oder B als Additiv mindestens einen latenten Härter für Epoxid-Präpolymere enthält, und
(e) die Komponenten A und B kein thermisch aktivierbares Treibmittel enthalten.

Es ist prinzipiell möglich, dass die erfindungsgemäßen Mittel zwei oder mehrere, beispielsweise drei, Komponenten aufweisen. Allerdings ist es erfindungsgemäß bevorzugt, das erfindungsgemäße Mittel als Zweikomponentenmittel zu konfektionieren.

Unter "resultierender Anwendungszubereitung" wird erfindungsgemäß jede Form der Mischung der Komponenten A und B dieses Zweikomponentenmittels verstanden.

Alle Angaben von Molekulargewichtsmitteln im Rahmen der vorliegenden Anmeldung verstehen sich als gewichtsmittleres Molekulargewicht (M_{w}), welches mittels Gelpermeationschromatographie (GPC) mit Polystyrol als Standard bestimmt wird.

Als ersten wesentlichen Bestandteil enthält die Komponente A der erfindungsgemäßen Mittel mindestens eine Verbindung mit zwei oder mehreren Isocyanat-Gruppen.

Als "Verbindung mit zwei oder mehreren Isocyanat-Gruppen" im Sinne der vorliegenden Erfindung eignen sich insbesondere die für Klebstoffanwendungen bekannten difunktionellen Isocyanate (Diisocyanate), trifunktionellen Isocyanate (Triisocyanate) und/oder Polyisocyanate. Unter "Polyisocyanaten" werden erfindungsgemäß Verbindungen verstanden, die mehr als drei Isocyanatgruppen aufweisen. Verbindungen mit zwei oder mehr Isocyanat-Gruppen pro Molekül sind erfindungsgemäß besonders bevorzugt.

Neben den monomeren Di-, Tri- und/oder Polyisocyanaten zählen auch die oligomeren und/oder polymeren Di-, Tri- und/oder Polyisocyanate (reaktive Präpolymere) zu den erfindungsgemäß bevorzugten "Isocyanaten". Unter einem "Oligomer" wird erfindungsgemäß eine Verbindung mit weniger als 4 Wiederholungseinheiten verstanden. Dementsprechend wird unter einem "Polymer" eine Verbindung mit 4 oder mehr Wiederholungseinheiten verstanden. Es hat sich als besonders bevorzugt erwiesen, Gemische von Verbindungen mit zwei oder mehreren Isocyanat-Gruppen, wie beispielsweise Oligomerenmischungen, einzusetzen.

Beispiele für geeignete monomere Di- ,Tri- oder Polyisocyanate sind 1,5-Naphthylendiisocyanat, 2,2'-, 2,4- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat,
Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, Trimethylhexamethylendiisocyanat, 1,4-Diisocyanatobutan, 1,12-Diisocyanatododecan, Dimerfettsäurediisocyanat. Besonders geeignet sind aliphatische Isocyanate wie Hexamethylendiisocynat, Undecan-, Dodecamethylendiisocyanat, 2,2,4-Trimethylhexan-2,3,3-Trimethyl-hexamethylen, 1,3- oder 1,4-Cyclohexandiisocynat-, 1,3- oder 1,4-Tetramethylxyloldiisocynat, Isophorondiisocynat, 4,4-Dicyclohexylmethan-, Lysinesterdiisocyanat oder Tetramethylxylylendiisocyanat (TMXDI). In dieser Gruppe können die aliphatischen Diisocyanate besonders bevorzugt sein.

Difunktionelle Isocyanate sind bevorzugt. Trifunktionelle Isocyanate können jedoch zumindest anteilig mit verwendet werden. Als trifunktionelle Isocyanate geeignet sind Isocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Zur Herstellung von Trimeren geeignete Isocyanate sind die bereits oben genannten Diisocyanate, wobei die Trimerisierungsprodukte von HDI, TMXDI oder IPDI besonders bevorzugt sind. Weiterhin erfindungsgemäß bevorzugt sind die polymeren Di-, Tri- oder Polyisocyanate, wie insbesondere das polymere MDI, sowie Mischungen von polymeren Di-, Tri- oder Polyisocyanaten mit monomeren Di- ,Tri- oder Polyisocyanaten.

Besonders bevorzugt sind erfindungsgemäß Verbindungen mit zwei oder mehreren Isocyanat-Gruppen, die eine Polyetherstruktur aufweisen. Isocyanat-Gruppen-haltige Derivate von Polyethylenglykol, Polypropylenglykol und/oder Polytetrahydrofuran sind erfindungsgemäße besonders bevorzugt. Die Epoxidklebstoffe, die mit in-situ gebildeten Polyurethanen auf Basis dieser Isocyanate ausgestattet sind, zeichnen sich durch eine besonders vorteilhafte Kombination aus Schlagzähigkeit und Formstabilität vor der Härtung aus.

Weiterhin hat es sich als vorteilhaft erwiesen, wenn die Verbindungen mit zwei oder mehreren Isocyanat-Gruppen ein mittleres Molekulargewicht von kleiner 5000g/mol, insbesondere kleiner als 3000g/mol aufweisen. Verbindungen mit zwei oder mehreren Isocyanat-Gruppen mit einem mittleren Molekulargewicht von mehr als 150g/mol, insbesondere von mehr als 250g/mol sind ebenfalls bevorzugt.

Verbindungen mit zwei oder mehreren Isocyanat-Gruppen mit einem Isocyanatäquivalenzgewicht von 80g/eq bis 2000g/eq, insbesondere von 125 g/eq bis zu 1000 g/eq haben sich hinsichtlich ihrer Reaktivität als erfindungsgemäß bevorzugt erwiesen.

Die Mittel der vorliegenden Erfindung enthalten die mindestens eine Verbindung mit zwei oder mehreren Isocyanat-Gruppen vorzugsweise in einer Menge von 2 bis 70Gew.-%, insbesondere von 5 bis 50Gew.-%, jeweils bezogen auf die resultierende Anwendungszubereitung aus den Komponenten A und B.

Die Komponente A der erfindungsgemäßen Mittel enthält die Verbindung(en) mit zwei oder mehreren Isocyanatgruppen gemeinsam mit einem oder mehreren Additiven. Unter einem "Additiv" wird erfindungsgemäß ein weiterer Bestandteil verstanden, der gemeinsam mit der Isocyanatgruppenhaltigen Verbindung konfektioniert ist. Dabei spielt die Natur des weiteren Bestandteils erfindungsgemäß keine Rolle, d.h. das Additiv kann beispielsweise ein weiterer Wirkstoff, wie beispielsweise ein Härter oder ein Epoxidpräpolymer, ein reiner Füllstoff oder eine Verbindung sein, die die Lagerstabilität der Isocyanatverbindung verbessert.

Weiterhin ist es erfindungsgemäß wesentlich, dass die Komponente B des erfindungsgemäßen Mittel mindestens eine Verbindung, die mindestens zwei reaktive Gruppen, ausgewählt aus Hydroxygruppenund Thiolgruppen, aufweist und gleichzeitig frei von Epoxygruppen ist, enthält.

Verbindungen sind erfindungsgemäß "frei von Epoxidgruppen", wenn sie keine Epoxidgruppen im Molekül enthalten. Im Rahmen der dieser Erfindung zugrunde liegenden Arbeiten hat sich herausgestellt, dass die Funktion der Verbindung, die mindestens zwei reaktive Gruppen, ausgewählt aus Hydroxygruppen und Thiolgruppen, aufweist, nicht von Epoxid-Präpolymeren übernommen werden kann, die weiterhin über eine entsprechende Anzahl von Hydroxygruppen verfügen. Durch die zusätzliche Anwesenheit der erfindungswesentlichen Verbindungen ist es erfindungsgemäß möglich, die Schlagzähigkeit sowie die Formstabilität des resultierenden Klebemittels optimal einzustellen.

Erfindungsgemäß sind daher Verbindungen, die mindestens zwei reaktive Gruppen ausgewählt aus Hydroxygruppen und/oder Thiolgruppen aufweisen. Reaktive -OH-Gruppen sind erfindungsgemäß ganz besonders bevorzugt. Dementsprechend kann es bevorzugt sein, wenn die Komponente B mindestens ein Diol und/oder Polyol, vorzugsweise mindestens ein Polyol enthält.
Es ist erfindungsgemäß besonders bevorzugt, wenn die Komponente B mindestens eine Verbindung, die mindestens zwei reaktive Hydroxygruppen aufweist und gleichzeitig frei von Epoxygruppen ist, sowie ein oder mehrere weitere Additive enthält.

Als Di- oder Polyole können die aus der Polyurethan-Technologie bekannten Polyole mit einem mittleren Molekulargewicht bis 50000 g/mol ausgewählt werden. Sie können beispielsweise auf Basis von Polyethern, Polyestern, Polyolefinen, Polyacrylaten oder Polyamiden ausgewählt werden, wobei diese Polymere zusätzlich OH-Gruppen aufweisen müssen. Beispielsweise sind di- oder trifunktionelle Polyethylenpolyetherpolyole geeignet.

Geeignete Polyetherpolyole sind beispielsweise lineare oder verzweigte Polyether, die eine Mehrzahl von Etherbindungen aufweisen und die zumindest zwei Alkoholgruppen enthalten, vorzugsweise an den Kettenenden. Sie enthalten im Wesentlichen keine anderen funktionellen Gruppen als die OH-Gruppen. Solche Polyetherpolyole entstehen als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, wie 1,2-Butandiol, 1,3-Butandiol, 1,4-Butandiol und 2,3-Butandiol, Pentandiolen und Hexandiolen, 2,2-Dimethyl-1,3-propandiol, 2-Methylpropandiol, Polyglycerol, 1,6-Hexandiol, 2,4,4-Trimethylhexandiol-1,6, 2,2,4- Trimethylhexandiol-1,6, 1,4-Cyclohexandimethanol, oder aromatischen Diolen, wie 4,4'-Dihydroxy-diphenylpropan, Bisphenol A, Bisphenol F, Brenzkatechin, Resorcin, Hydrochinon oder Gemischen aus zwei oder mehr davon. Weitere, im Rahmen der Erfindung geeignete Polyole entstehen durch Polymerisation von Tetrahydrofuran (Poly-THF). Ferner sind auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet. Sie weisen dieselbe Anzahl endständiger OH-Gruppen auf wie der Ausgangsalkohol.

Anstelle der oder zusammen mit den Polyetherpolyolen können auch Polyesterpolyole eingesetzt werden. Diese entstehen durch eine Polykondensationsreaktion eines mehrwertigen Alkohols mit beispielsweise 2 bis 15 C-Atomen und vorzugsweise 2 oder 3 OH-Gruppen mit einer oder mehreren Polycarbonsäuren, vorzugsweise solchen mit 2 bis 14 C-Atomen (einschließlich der C-Atome der Carboxylgruppen) und mit 2 bis 6 Carboxylgruppen. Dabei sind Dicarbonsäuren bevorzugt, die zusammen mit Diolen zu linearen Polyesterdiolen oder mit Triolen zu verzweigten Polyestertriolen führen. Umgekehrt lassen sich verzweigte Polyestertriole auch durch Umsetzung eines Diols mit einer Tricarbonsäure erhalten. Als Alkoholkomponente des Polyesterpolyols können beispielsweise verwendet werden: Ethylenglykol, 1,2-Propandiol, 1,3-Propandiol, die isomeren Butandiole, Pentandiole, Hexandiole, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, Cyclohexandiol-1,4, 1,4-Cyclohexandimethanol, oder aromatischen Diolen, wie 4,4'-Dihydroxy-diphenylpropan, Bisphenol A, Bisphenol F, Brenzkatechin, Resorcin, Hydrochinon. Geeignete Carbonsäuren sind beispielsweise: Phthalsäure, Isophthalsäure, Terephthalsäure, Maleinsäure, Dodecylmaleinsäure, Octadecenylmaleinsäure, Fumarsäure, Akonitsäure, 1,2,4-Benzoltricarbonsäure, 1,2,3-Propantricarbonsäure, Malonsäure, Bernsteinsäure, Glutarsäure, Adipinsäure, Pimelinsäure, Sebacinsäure, Cyclohexan-1,2-Dicarbonsäure, 1,4-Cyclohexadien-1,2-dicarbonsäure und weitere. Anstelle der Carbonsäuren können auch deren Anhydride eingesetzt werden.

Wegen des für die erfindungsgemäße Anwendung besonders geeigneten Vernetzungsverhaltens ist es bevorzugt, Diisocyanate in Kombination mit trifunktionellen Polyolen und/oder aliphatischen Diolen einzusetzen. Polyethylenpolyetherpolyole und/oder Butandiole, insbesondere 1,4-Butandiol, können ganz besonders bevorzugte Vertreter der Gruppe der Di- oder Polyole sein.
In einer bevorzugten Ausführungsform der vorliegenden Erfindung hat es sich als vorteilhaft erwiesen, wenn die Verbindung, die mindestens zwei reaktive Gruppen, ausgewählt aus Hydroxygruppen und Thiolgruppen, aufweist und gleichzeitig frei von Epoxygruppen ist, eine Polyetherstruktur aufweist. Dies sind beispielsweise die entsprechenden Derivate von Polyethylenglykol, Polypropylenglykol und/oder Polytetrahydrofuran. Die Hydroxy-terminierten Derivate von Polyethylenglykol, Polypropylenglykol und/oder Polytetrahydrofuran sind erfindungsgemäß ganz besonders bevorzugt. Weiterhin hat sich die Gruppe der Alkyldiole, wie beispielsweise Butandiol und Hexandiol, als erfindungsgemäß ganz besonders bevorzugt erwiesen. Diese bevorzugten Poly- und Diole haben einen besonders vorteilhaften Einfluss auf die Schlagzähigkeit der resultierenden Klebstoffe.

Weiterhin hat es sich als vorteilhaft erwiesen, wenn die Verbindung, die mindestens zwei reaktive Gruppen, ausgewählt aus Hydroxygruppen und Thiolgruppen, aufweist und gleichzeitig frei von Epoxygruppen ist, ein Molekulargewichtsmittel von weniger als 4000g/mol, vorzugsweise von weniger als 2000g/mol aufweist. Verbindungen, die mindestens zwei reaktive Gruppen ausgewählt aus Hydroxygruppen und Thiolgruppen, aufweisen und gleichzeitig frei von Epoxygruppen sind, und ein mittleres Molekulargewicht von mindestens 60g/mol, insbesondere mindestens 90g/mol aufweisen, sind erfindungsgemäß besonders bevorzugt.

Das Verhältnis von Isocyanat-Äquivalenzgewicht zu Hydroxyäquivalenzgewicht liegt erfindungsgemäß vorzugsweise im Bereich von 1 : 5 bis 1 : 1.

Die Mittel der vorliegenden Erfindung enthalten die Verbindungen, die mindestens zwei reaktive Gruppen, ausgewählt aus Hydroxygruppen und Thiolgruppen, aufweisen und gleichzeitig frei von Epoxygruppen sind, vorzugsweise in einer Menge von 0,5 bis 60Gew.-%, insbesondere von 1,5 bis 35Gew.-% jeweils bezogen auf die resultierende Anwendungszubereitung aus den Komponenten A und B.

Weiterhin kann es bevorzugt sein, dass die erfindungsgemäßen Mittel ein oder mehrere Diole und/oder Polyole in einer Menge von 0,5 bis 60Gew.-%, insbesondere von 1,5 bis 35Gew.-%, jeweils bezogen auf die resultierende Anwendungszubereitung aus den Komponenten A und B, enthalten.

Die Komponente B der erfindungsgemäßen Mittel enthält die Verbindung(en), die mindestens zwei reaktive Gruppen, ausgewählt aus Hydroxygruppen und Thiolgruppen, aufweisen und gleichzeitig frei von Epoxygruppen sind, gemeinsam mit einem oder mehreren Additiven. Unter einem "Additiv" wird erfindungsgemäß ein weiterer Bestandteil verstanden, der gemeinsam mit der OH- oder SH- Gruppen-haltigen Verbindung konfektioniert ist. Dabei spielt die Natur des weiteren Bestandteils erfindungsgemäß keine Rolle, d.h. das Additiv kann beispielsweise ein weiterer Wirkstoff, wie beispielsweise ein Härter oder ein Epoxidpräpolymer, ein reiner Füllstoff oder eine Verbindung sein, die die Lagerstabilität der Komponente B verbessert.

Als dritten wesentlichen Bestandteil enthält mindestens eine der Komponenten A und/oder B als Additiv mindestens ein Epoxidpräpolymer, das bei 22 °C flüssig ist.

Die Epoxid-Präpolymere, im folgenden auch als "Epoxidharze" bezeichnet, können grundsätzlich gesättigte, ungesättigte, cyclische oder acyclische, aliphatische, alicyclische, aromatische oder heterocyclische Polyepoxidverbindungen sein.

Geeignete Epoxidharze werden beispielsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat. Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Präpolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Präpolymere sind Polyglycidylether von Polyalkoholen oder Diaminen. Solche Polyglyzidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oderTrimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331 ", "DER-332", "DER-334", "DER-671 ", "DER-732" und "DER736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methylcyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Kresol Produkte von Sartomer), Epoxidfunktionalität enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite™ 6010, Araldit™ GY-281™, Araldit™ ECN-1273, Araldit™ ECN-1280, Araldit™ MY-720, RD-2 von der Huntsman Int. LLC; DEN™ 432, DEN™ 438, DEN™ 485 von Dow Chemical Co., Epon™ 812, 826, 830, 834, 836, 871, 872,1001, 1002, 1031 etc. von Hexion Specialty Chemicals Inc. und HPT™ 1071, HPT™ 1079 ebenfalls von Hexion Specialty Chemicals Inc., als Novolak-Harze weiterhin beispielsweise Epi-Rez™ 5132 von Hexion Specialty Chemicals Inc., ESCN-001 von Sumitomo Chemical, Quatrex5010 von Dow Chemical Co., RE 305S von Nippon Kayaku, Epiclon™ N673 von DaiNipon Ink Chemistry oder Epicote™ 152 von Hexion Specialty Chemicals Inc.

Insbesondere die multifunktionellen Epoxidpräpolymere, wie beispielsweise die Novolak-Harze und die Derivate des Tetraphenylolethans, haben sich als erfindungsgemäß bevorzugte Harze zur Erhöhung der Glasübergangstemperatur und der damit verbundenen Verbesserung der mechanischen Eigenschaften erwiesen.

Weiterhin kann es erfindungsgemäß bevorzugt sein, Epoxydpräpolymere zu verwenden, die im Wesentlichen frei von Hydroxygruppen sind. Im Wesentlichen frei von Hydroxygruppen sind Epoxidpräpolymere, wenn sie ein Hydroxyäquivalenzgewicht von mindestens 4000g/eq aufweisen, wie beispielsweise das unter der Handelsbezeichnung DER332 vertriebene Produkt.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Das Epoxid-Äquivalent geeigneter Polyepoxide kann zwischen 150 und 50000, vorzugsweise zwischen 170 und 5000, variieren. Beispielsweise ist ein Epoxidharz auf Basis Epichlorhydrin/Bisphenol-A geeignet, das ein Epoxid-Äquivalentgewicht von 475 bis 550 g/eq bzw. einen Epoxidgruppen-Gehalt im Bereich von 1820 bis 2110 mmol/g aufweist. Der nach RPM 108-C bestimmte Erweichungspunkt liegt im Bereich von 75 bis 85°C.

Dabei enthalten die erfindungsgemäßen Mittel mindestens ein Epoxid-Präpolymer, das bei Raumtemperatur (22°C) flüssig ist. Dieses verringert die Viskosität der Vormischung und erleichtert daher das Einbringen der beiden Vormischungen in die Form.

Daher enthält mindestens eine der Komponenten A oder B, vorzugsweise sowohl die Komponente A als auch die Komponente B, ein bei 22 °C flüssiges Epoxid-Präpolymer.

Es kann aber auch bevorzugt sein, dass nur eine der Komponenten A oder B, vorzugsweise die Komponente B, ein bei 22 °C flüssiges Epoxid-Präpolymer enthält.

Als bei Raumtemperatur flüssige Epoxid-Präpolymere werden vorzugsweise Reaktionsprodukte von Epichlorhydrin mit Bisphenol A oder Bisphenol F eingesetzt. Die bei Raumtemperatur flüssigen Epoxidharze haben in der Regel ein Epoxid-Äquivalentgewicht von etwa 150 g/eq bis etwa 480 g/eq. Besonders bevorzugt ist ein Epoxid-Äquivalentgewichtbereich von 182 g/eq bis 350 g/eq.

Jedoch kann es ebenfalls bevorzugt sein, dass mindestens eine der Komponenten A oder B, vorzugsweise zumindest die Komponente B, zusätzlich zu dem bei 22 °C flüssigen Epoxid-Präpolymer ein bei 22 °C festes oder halbfestes Epoxid-Präpolymer enthält. Dieses trägt dazu bei, dass die Formkörper nach der Vorhärtung die erforderliche Festigkeit aufweisen, und es reduziert die Klebrigkeit der Formkörper im Vergleich zu Formkörpern, die nur flüssige Epoxidharz-Präpolymere enthalten.

Die bei Raumtemperatur (22 °C) festen Epoxidharze sind ebenfalls aus Polyphenolen und Epichlorhydrin erhältlich. Besonders bevorzugt sind hier solche auf der Basis von Bisphenol A oder Bisphenol F mit einem Schmelzpunkt zwischen 45°C und 90°C, vorzugsweise zwischen 50°C und 80°C. Von den flüssigen Epoxidharzen unterscheiden sich letztere im Wesentlichen durch ihr höheres Molekulargewicht, wodurch diese bei Raumtemperatur fest werden. Erfindungsgemäß haben die festen Epoxidharze ein Epoxid-Äquivalentgewicht von ≥ 400 g/eq. Besonders bevorzugt ist ein Epoxid-Äquivalentgewicht von 450 g/eq bis etwa 900 g/eq. Halbfeste Epoxidharze liegen in ihren Eigenschaften bei 22 °C zwischen festen und flüssigen Epoxidharzen. Im Gegensatz zu flüssigen Epoxidharzen nehmen sie nicht innerhalb von 10 Minuten unter Einfluss der Schwerkraft die Form des Gefäßes an und bilden eine im Wesentlichen glatte Oberfläche, sondern sie sind unter Einfluss der Schwerkraft für mindestens 10 Minuten formstabil. Sie können jedoch durch manuell ausgeübten Druck verformt werden, ohne dass sie brechen oder nach Nachlassen des Drucks die alte Form wieder zumindest angenähert einnehmen. Halbfeste Epoxidharze sind also manuell leicht verformbar, aber nicht elastisch.

In einer ganz besonders bevorzugten Ausführungsform hat es sich als vorteilhaft erwiesen, wenn nur die Komponente B ein Epoxidharz enthält, das heißt, dass die Komponenten A frei von Epoxidharzen formuliert ist. Zubereitungen sind erfindungsgemäß "frei von Epoxidharzen" wenn sie weniger als 3Gew.-%, vorzugsweise weniger als 1 Gew.-%, ganz besonders bevorzugt weniger als 0,1 Gew.-% eines Epoxidharzes enthalten. Die derartigen Zusammensetzungen zeichnen sich insbesondere durch eine gesteigerte Lagerstabilität aus.

Gegebenenfalls können die erfindungsgemäßen Mittel als weitere Epoxidpräpolymere auch Reaktivverdünner zum Einstellen des Fließverhaltens enthalten. Reaktive Verdünner im Sinne dieser Erfindung sind Epoxygruppen enthaltende, niederviskose Substanzen (Glycidylether oder Glycidylester) mit aliphatischer oder aromatischer Struktur. Typische Beispiele für Reaktivverdünner sind Mono-, Di- oder Triglycidylether von C₆- bis C₁₄-Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, Neopentylenglycols, 1,4-Butylenglycols, 1,5-Pentandiols, 1,6-Hexandiols, Cyclohexandimethanols, Triglycidylether des Trimethylolpropans sowie die Glycidylester von C₆- bis C₂₄- Carbonsäuren oder deren Mischungen.

Die Mittel der vorliegenden Erfindung enthalten die Epoxidpräpolymere vorzugsweise in einer Menge von 20 bis 90Gew.-%, insbesondere von 40 bis 80Gew.-%, jeweils bezogen auf die resultierende Anwendungszubereitung aus den Komponenten A und B.

Es kann erfindungsgemäß bevorzugt sein, wenn bis zu 10Gew.-%, insbesondere 0 bis 5Gew.-% der eingesetzten Epoxidharze Reaktivverdünner sind.

Es kann erfindungsgemäß bevorzugt sein, dass die Epoxidpräpolymeren vollständig in Komponente B eingearbeitet werden. Alternativ kann es aber auch bevorzugt sein, wenn sowohl die Komponenten A als auch die Komponente B Epoxidpräpolymere enthält. Dabei hat es sich als vorteilhaft erwiesen, wenn 10 bis 90% der gesamten Epoxidmasse in die Komponente A und die restlichen 90 bis 10% der gesamten Epoxidmasse in die Komponente B eingearbeitet werden.

Ferner hat es sich als vorteilhaft erweisen, wenn die resultierende Anwendungszubereitung einen größeren Gewichtsanteil an Epoxypräpolymeren aufweist als an den am Vorhärtungsmechanismus beteiligten Komponenten.

Als vierten wesentlichen Bestandteil enthält mindestens eine der Komponenten A und/oder B als Additiv mindestens einen latenten Härter für Epoxidpräpolymere.

Unter einem latenten (oder auch thermisch aktivierbaren) Härter werden erfindungsgemäß Verbindungen verstanden, die bei 22°C gemeinsam mit den Epoxidpräpolymeren gelagert werden können, ohne dass die Härtungsreaktion in nennenswertem Umfang einsetzt. Erst oberhalb von 80°C, vorzugsweise oberhalb von 100°C verändert sich die molekulare Struktur der latenten Härter, so dass derartige Verbindungen oberhalb dieser Temperatur als Härter wirken und die Polymerisationsreaktion der Epoxidpräpolymere starten und/oder beschleunigen.

Die latenten Härter können beispielsweise ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethylethoxymethylbenzoguanamin genannt. Weiterhin können 3,3- Diaminodiphenylsulfon und 4,4-Diaminodiphenylsulfon sowie deren Derivate oder Ionische Flüssigkeiten (Imidazolium Salze), wie etwa Baxxodur^{®} ECX-2450 als latente Härter verwendet werden. Weiterhin sind die unter den Handelsbezeichungen Ancamine^{®} 2014, Ancamine^{®} 2337, Adeka^{®} EH-4357 und Adeka^{®} EH-4360 erfindungsgemäß bevorzugt. Auch mikroverkapselte Systeme, wie sie unter der Handelsbezeichnung Novacure von der Firma Asahi Denka vertrieben werden, sind erfindungsgemäß bevorzugt. Ganz besonders bevorzugt ist Dicyandiamid geeignet.

Weiterhin sind phenolische Härter, wie sie beispielsweise von der Firma Hexion unter der Handelsbezeichnung Durite^{®} (insbesondere Durite^{®} SD 1713 und Durite^{®} SC-1008) vertrieben werden, erfindungsgemäß besonders bevorzugt.

Es hat sich erfindungsgemäß als vorteilhaft erwiesen, wenn der latente Härter für Epoxidpräpolymere in der Komponente B enthalten ist, so dass eine unerwünschte Reaktion mit den Verbindungen mit zwei oder mehr Isocyanatgruppen vermieden werden kann.

Die latenten Härter sind in den erfindungsgemäßen Mitteln vorzugsweise in einer Menge von 1 bis 15 Gew.-%, insbesondere von 3 bis 10 Gew.-%, jeweils bezogen auf die resultierende Anwendungszubereitung aus den Komponenten A und B, enthalten.

Zusätzlich zu den vorgenannten Härtern können erfindungsgemäß katalytisch wirksame substituierte Harnstoffe eingesetzt werden. Dies sind insbesondere der p-Chlorphenyl-N,N-dimethylharnstoff (Monuron), 3-Phenyl-1,1 -dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Im Rahmen der vorliegenden Erfindung ist es bevorzugt, aber nicht zwingend erforderlich, dass mindestens eine der Komponenten A und B, vorzugsweise die Komponente B, zusätzlich einen derartigen Härtungsbeschleuniger für Epoxid-Präpolymere enthält, insbesondere Addukte von Aminoverbindungen an Epoxidharze.

Die Härtungsbeschleuniger für Epoxidpräpolymere sind in den erfindungsgemäßen Mitteln vorzugsweise in einer Menge von 0 bis 5Gew.-%, insbesondere von 0,1 bis 2Gew.-%, jeweils bezogen auf die resultierende Anwendungszubereitung aus den Komponenten A und B, enthalten.

Weiterhin ist es erfindungswesentlich, dass die Mittel frei von thermisch aktivierbaren Treibmitteln konfektioniert sind. Mittel sind erfindungsgemäß "frei von thermisch aktivierbaren Treibmitteln", wenn ihnen weniger als 0,3 Gew.-%, vorzugsweise 0Gew.-%, eines thermisch aktivierbaren Treibmittels zugesetzt wurden, jeweils bezogen auf die resultierende Anwendungszubereitung aus den Komponenten A und B.

Zur Beschleunigung der Vorhärtung der vereinigten Vormischungen unter Reaktion der reaktiven Cyanatharze, vorzugsweise unter Polyurethanbildung, ist es bevorzugt, dass mindestens eine der Komponenten A und B (vorzugsweise nur die Komponente B) zusätzlich einen Härtungskatalysator für Isocyanate enthält. Beispielsweise sind hierfür Dialkylzinn-Dicarboxylate geeignet, wie beispielsweise Dibutylzinn-Dicarboxylate. Die Carboxylat-Gruppen können ausgewählt werden aus solchen mit insgesamt (also einschließlich der Carboxylgruppe) 2 bis 18 C-Atomen. Als Carbonsäuren zur Bildung der Carboxylate geeignet sind beispielsweise Essigsäure, Propionsäure, Buttersäure, Valeriansäure, Capronsäure, Caprylsäure, Caprinsäure, Laurinsäure, Palmitinsäure und Stearinsäure. Insbesondere ist DibutylzinnDilaurat geeignet. Des Weiteren können metallorganische Verbindungen auf Basis Bismuth und Zink wie z. B. Bismuth-Zink-Neodecanoat oder aber rein organische Beschleuniger wie Dimethylbenzylamin oder Diazabicyclooctan verwendet werden.

Derartige Härtungskatalysatoren für Isocyanate sind in den erfindungsgemäßen Mitteln vorzugsweise in einer Menge von 0 bis 3 Gew.-%, insbesondere von 0,02-0,5Gew.-%, jeweils bezogen auf die resultierende Anwendungszubereitung aus den Komponenten A und B, enthalten.

Im Rahmen einer weiteren bevorzugten Ausführungsform der vorliegenden Erfindung enthalten die Komponente A und/oder B mindestens einen Füllstoff.

In der Regel sind die bekannten Füllstoffe wie zum Beispiel die diversen gemahlenen oder gefällten Kreiden, Ruß, Calcium-Magnesiumcarbonate, Talkum, Kaoline, Schwerspat sowie insbesondere silikatische Füllstoffe vom Typ des Aluminium-Magnesium-Calcium-Silicats, z. B. Wollastonit, Bentonite, Chlorit erfindungsgemäß bevorzugt. Vorzugsweise können Glimmer-haltige Füllstoffe mit verwendet werden, ganz besonders bevorzugt ist hier ein so genannter 2- Komponentenfüllstoff aus Muskovit-Glimmer und Quarz mit niedrigem Schwermetallgehalt.

Zur Gewichtsreduzierung kann das Stoffgemisch zusätzlich zu den vorgenannten "normalen" Füllstoffen so genannte Leichtfüllstoffe enthalten. Leichtfüllstoffe zeichnen sich erfindungsgemäß dadurch aus, dass sie eine geringere Dichte aufweisen als die Zubereitung in die sie eingearbeitet werden, und somit deren Zugabe die Dichte der Zubereitung reduziert. Derartige Leichtfüllstoffe können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die thermisch härtbaren Massen zusätzlich Fasern, beispielsweise auf der Basis von Aramidfasern, Kohlenstoff-Fasern, Metallfasern - z.B. aus Aluminium -, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Die Füllstoffe (normale Füllstoffe, Leichtfüllstoffe und Fasern gemeinsam) sind in den erfindungsgemäßen Mittel vorzugsweise in Mengen von 1 bis 30Gew.-%, insbesondere von 8 bis 20Gew.-%, jeweils bezogen auf die resultierende Anwendungszubereitung aus den Komponenten A und B, enthalten.

Weiterhin hat es sich als vorteilhaft erwiesen, wenn mindestens eine der Komponenten A und/oder B als Additiv mindestens ein Trockenmittel enthält. Unter "Trockenmittel" werden erfindungsgemäß Verbindungen verstanden, die in der Lage sind Flüssigkeiten, vorzugsweise Wasser, zu binden. Erfindungsgemäß bevorzugte Vertreter diese Stoffklasse sind Calciumoxid und/oder Magnesiumoxid und/oder Zeolithe.

Es kann erfindungsgemäß besonders bevorzugt sein, wenn das Trockenmittel in der Komponente A konfektioniert ist. Auf diese Weise wird eine Zersetzung der Isocyanatgruppen durch CO₂-Abspaltung bei Anwesenheit von Wasser vermieden und die resultierenden Verklebungen weisen weniger unbeabsichtigte Gaseinschlüsse auf.

Das Trockenmittel ist in den erfindungsgemäßen Mittel vorzugsweise in Mengen von 0,5 bis 5Gew.-%, insbesondere von 1 bis 3Gew.-%, jeweils bezogen auf die resultierende Anwendungszubereitung aus den Komponenten A und B, enthalten.

In einer weiteren Ausgestaltungsform hat es sich als vorteilhaft erwiesen, wenn die erfindungsgemäßen Mittel mindestens ein Thixotrop, wie beispielsweise pyrogene Kieselsäure und/oder Pulp-Fasern, enthalten. Durch die Zugabe des Thixotrops wird die Standfestigkeit der Formulierungen erhöht. So hat es sich beispielsweise als vorteilhaft erwiesen, mittels der gezielten Zugabe von Thixotropen die Viskositäten der beiden Komponenten A und B aneinander anzugleichen. Dabei kann das Thixotrop in der Komponente A und/oder der Komponente B enthalten sein. Es kann bevorzugt sein, wenn sowohl die Komponente A als auch die Komponente B ein Thixotrop enthält.

Das Thixotrop ist in den erfindungsgemäßen Mittel vorzugsweise in Mengen von 0 bis 8Gew.-%, insbesondere von 0,1 bis 4Gew.-%, jeweils bezogen auf die resultierende Anwendungszubereitung aus den Komponenten A und B, enthalten.

In einer weiteren bevorzugten Ausführungsform enthält die Komponente A und/oder die Komponente B der erfindungsgemäßen Mittel mindestens einen Schlagzähigkeits-Verbesserer (englisch: "toughener"). Derartige Schlagzähigkeits-Verbesserer verbessern das Bruchverhalten der erfindungsgemäßen Zubereitungen und sind dem Fachmann auf dem Gebiet der Epoxid-Klebstoffe bekannt. Beispielsweise können sie ausgewählt sein aus: thermoplastischen Isocyanaten oder Polyurethanen, Kautschuk-Partikeln, insbesondere solchen mit Kern-Schale-Struktur, und Block-Copolymeren, insbesondere solchen, die einen ersten Polymerblock mit einer Glasübergangstemperatur von unterhalb 15 °C und einen zweiten Polymerblock mit einer Glasübergangstemperatur von oberhalb 25 °C enthalten. Derartige Block-Copolymere sind vorzugsweise ausgewählt aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block. Spezielle Beispiele hierfür sind Block-Copolymere mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat.

Erfindungsgemäß bevorzugte "toughener" sind weiterhin Kautschuk-Partikel mit Kern-Schale-Struktur, die einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem DienHomopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale covalent vernetzt sein, indem man Monomere einsetzt, die zwei oder mehr Doppelbindungen pro Molekül aufweisen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kern-Schale-Partikel so aufgebaut, dass der Kern 50 bis 95 Gew.-% des Kern-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kern-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kern-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kern-Schale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kern-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Dieselbe Funktion wie die vorstehend genannten Kautschuk-Partikel mit Kern-Schale-Struktur können anorganische Partikel übernehmen, die eine Hülle aus organischen Polymeren aufweisen.

In dieser Ausführungsform enthält das erfindungsgemäße Mittel vorzugsweise anorganische Partikel, die eine Hülle aus organischen Polymeren aufweisen, wobei die organischen Polymere ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Die Acrylsäure- und/oder Methacrylsäureester stellen vorzugsweise Methyl- und/oder Ethylester dar, wobei besonders bevorzugt mindestens ein Anteil der Ester als Methylester vorliegt. Zusätzlich können die Polymere auch unveresterte Acryl- und/oder Methacrylsäure enthalten, was die Anbindung der organischen Polymere an die Oberfläche der anorganischen Partikel verbessern kann. Daher ist es in diesem Fall besonders bevorzugt, wenn die Monomereinheiten aus unveresterter Acryl- und/oder Methacylsäure (nahe) an demjenigen Ende der Polymerkette liegen, das sich an die Oberfläche der anorganischen Partikel bindet.

Dabei ist es bevorzugt, dass die organischen Polymere zu mindestens 80 Gew.-% aus Acrylsäure- und/oder Methacrylsäureester bestehen. Insbesondere können sie zu 90 Gew.-%, 95 Gew-% oder vollständig hieraus bestehen. Sofern die organischen Polymere andere Monomere als diese Acrylsäure- und/oder Methacrylsäureester bzw. unveresterte Acrylsäure- und/oder Methacrylsäure enthalten, sind diese vorzugsweise ausgewählt aus Comonomeren, die Epoxy- Hydroxy- und/oder Carboxyl-Gruppen aufweisen.

Die organischen Polymere der Hülle sind vorzugsweise unvernetzt oder so schwach vernetzt, dass nicht mehr als 5 % an Monomer-Einheiten einer Kette mit Monomer-Einheiten einer anderen Kette vernetzt sind. Dabei kann es vorteilhaft sein, dass die Polymere in der Nähe der Oberfläche der anorganischen Partikel stärker vernetzt sind als weiter außen in der Hülle. Insbesondere ist die Hülle vorzugsweise so aufgebaut, dass mindestens 80 %, insbesondere mindestens 90 % und besonders bevorzugt mindestens 95 % der Polymerketten mit einem Ende an die Oberfläche der anorganischen Partikel angebunden sind.

Die anorganischen Partikel weisen vor dem Aufbringen der Hülle aus organischen Polymeren vorzugsweise eine mittlere Teilchengröße im Bereich von 1 bis 1000, insbesondere im Bereich von 5 bis 30 nm auf. Bekanntermaßen ist die Teilchengröße durch Lichtstreumethoden sowie elektronenmikroskopisch bestimmbar.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.-% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder-hydroxide sowie SiO₂ bzw. die als "Kieselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1 469 020 A1 beschriebenen Herstellungsweise verfahren, wobei man als organische Beschichtungskomponente für die Partikel Monomere oder Prepolymere des Hüllmaterials einsetzt. Weiterhin ist eine Herstellung der umhüllten Partikel durch "atom transfer radical polymerization" möglich, wie es beispielhaft für die Polymerisation von n-Butylacrylat auf Kieselsäure-Nanopartikel beschrieben wurde in: G. Carrot, S. Diamanti, M. Manuszak, B. Charleux, J.-P. Vairon: "Atom Transfer Radical Polymerization of n-Butyl Acrylate from Silica Nanoparticles", J. Polym. Sci., Part A: Polymer Chemistry, Vol. 39, 4294-4301 (2001).

Weiterhin kann auf Herstellverfahren zurückgegriffen werden, wie sie in der WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Dabei kann auch dem Vorschlag dieses Dokuments gefolgt werden (Seite 15, Zeilen 9 bis 24), die anorganischen Kerne vor der Aufpolymerisation des Mantels einer Vorbehandlung zu unterziehen. Hierzu heißt es an der genannten Stelle:
"Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen zu anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppen-tragenden Oberflächen mit Polymeren ist beispielsweise aus EP-A-337 144 bekannt".

Erfindungsgemäß enthält die Masse als zusätzliche Komponente e) mindestens ein Block-Copolymer. Dieses wird vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten. Weiterhin sind solche Block-Copolymere geeignet, die ausgewählt sind aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

Beispielsweise wird das Block-Copolymer (e) ausgewählt aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, (Meth)Acrylsäureester-Butylacrylat-(Meth)Acrylsäureester, vorzugsweise Methylmethacrylat-Butylacrylat-Methylmethacrylat

Die vorstehend genannten Block-Copolymere entsprechen denjenigen, die auch im Rahmen der bereits zitierten WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden. Dort finden sich auch Querverweise auf Dokumente, in denen die Herstellung solcher Block-Copolymere beschrieben ist.

Vorstehend wird die Zusammensetzung dieser Block-Copolymere dadurch definiert, dass für jeden Block die Monomer-Einheit angegeben ist. Dies ist so zu verstehen, dass das Block-Copolymer jeweils Polymerblöcke aus den genannten Monomeren enthält. Dabei können bei den einzelnen Polymerblöcken bis zu 20 mol/% der genannten Monomere durch andere Co-Monomere ersetzt werden. Insbesondere gilt dies für Blöcke aus Poly-Methylmethacrylat.

Die genannten Block-Copolymere verbessern die Schlagzähigkeit der ausgehärteten erfindungsgemäßen Massen, insbesondere bei Temperaturen unterhalb von 0°C.

Es hat sich erfindungsgemäß erwiesen, dass die Schlagzähigkeit der resultierenden Klebeverbindung weiter verbessert werden kann, wenn der Schlagzähigkeits-Verbesserer als weiteres Additiv in Komponente A der erfindungsgemäßen Mittel enthalten ist.

Die erfindungsgemäßen Mittel enthalten die Schlagzähigkeits-Verbesserer vorzugsweise in einer Menge von 0 bis 40Gew.-%, insbesondere von 5 bis 20Gew.-%, jeweils bezogen auf die resultierende Anwendungszubereitung aus den Komponenten A und B.

Weiterhin können die erfindungsgemäßen härtbaren Massen gängige weitere Hilfs- und Zusatzmittel wie beispielsweise Weichmacher, Rheologie-Hilfsmittel, Netzmittel, Haftvermittler, Alterungsschutzmittel, Stabilisatoren und/oder Farbpigmente enthalten. Je nach Anforderungsprofil in Bezug auf Verarbeitungseigenschaften, die Flexibilität, die geforderte Versteifungswirkung sowie den klebenden Verbund zu den Substraten können die Mengenverhältnisse der Einzelkomponenten in verhältnismäßig weiten Grenzen variieren.

Weiterhin gilt für die Zusammensetzung der Komponente A vorzugsweise eine oder beide der folgenden Bedingungen:
- Der Gewichtsanteil des Epoxid-Präpolymers, bezogen auf die gesamte Komponente A, beträgt 25 bis75 Gew.-%, vorzugsweise 30 bis70 Gew.-%;
- Der Gewichtsanteil des Isocyanats, bezogen auf die gesamte Komponente A, beträgt 20 bis 50 Gew.-%, vorzugsweise 30 bis 40 Gew.-%.

Besonders bevorzugt ist es, dass diese beiden Bedingungen gleichzeitig gelten.
In jedem Fall gilt, dass die Summe aus dem Gewichtsteil des Epoxidpräpolymers, dem Gewichtsteil der Verbindung mit zwei oder mehr Isocyanat-Gruppen sowie den Gewichtsteilen der gegebenenfalls weiteren Additive der Komponente A 100 Gew.-% ergibt.

Es kann bevorzugt sein, dass die Komponente A als Additiv 0 bis 50Gew.-%, insbesondere 0 bis 35 Gew.-% eines Schlagzähigkeitsverbesserers enthält.

Für die Komponente B gilt vorzugsweise eine oder beide der folgenden Bedingungen:
- Der Gewichtsanteil des Epoxid-Präpolymers, bezogen auf die gesamte Komponente B, beträgt 30 bis 95 Gew.-%, vorzugsweise 50 bis 85Gew.-%;
- Der Gewichtsanteil der Verbindung, die mindestens zwei reaktive Gruppen, ausgewählt aus Hydroxygruppen und Thiolgruppen, aufweist und gleichzeitig frei von Epoxygruppen ist, bezogen auf die gesamte Komponente B, beträgt 1 bis 30 Gew.-%, vorzugsweise 2,5 bis 15 Gew.-%.

Besonders bevorzugt ist es, dass diese beiden Bedingungen gleichzeitig gelten.
In jedem Fall gilt, dass die Summe aus dem Gewichtsteil des Epoxidpräpolymers, dem Gewichtsteil der Verbindung, die mindestens zwei reaktive Gruppen, ausgewählt aus Hydroxygruppen und Thiolgruppen, aufweist und gleichzeitig frei von Epoxygruppen ist, sowie die Gewichtsteile der gegebenenfalls weiteren Additive der Komponente B 100 Gew.-% ergibt.

Für die Komponente B gilt besonders vorzugsweise eine oder beide der folgenden Bedingungen:
- Der Gewichtsanteil des Epoxid-Präpolymers, bezogen auf die gesamte Komponente B, beträgt 30 bis 95 Gew.-%, vorzugsweise 50 bis 85Gew.-%;
- Der Gewichtsanteil der Verbindung, die mindestens zwei reaktive Gruppen, ausgewählt aus Hydroxygruppen und Thiolgruppen, aufweist,
gleichzeitig frei von Epoxygruppen und ausgewählt aus den Polyolen und Diolen ist, beträgt 1 bis 30 Gew.-%, vorzugsweise 2,5 bis 15 Gew.-%, bezogen auf die gesamte Komponente B,.

Besonders bevorzugt ist es, dass diese beiden Bedingungen gleichzeitig gelten.
In jedem Fall gilt, dass die Summe aus dem Gewichtsteil des Epoxidpräpolymers, dem Gewichtsteil der Verbindung, die mindestens zwei reaktive Gruppen, ausgewählt aus Hydroxygruppen und Thiolgruppen, aufweist, gleichzeitig frei von Epoxygruppen und ausgewählt aus den Polyolen und Diolen ist, sowie die Gewichtsteile der gegebenenfalls weiteren Additive der Komponente B 100 Gew.-% ergibt.

Dabei kann die Komponente B einen oder mehrere, vorzugsweise alle, der folgenden Additive, bezogen auf die gesamte Komponente B, enthalten:
i) 0 bis 30 Gew.-%, vorzugsweise 1 bis 20 Gew.-% Leichtfüllstoff,
ii) 0 bis 5 Gew.-%, vorzugsweise 1 bis 3 Gew.-% Wasser bindendes Mittel wie beispielsweise Calciumoxid,
iii) 2 bis 25 Gew.-%, vorzugsweise 5 bis 20 Gew.-% thermisch aktivierbarer Härter für Epoxide
iv) 0,5 bis 5Gew.-%, vorzugsweise 1 bis 3,5Gew.-% eines Härtungsbeschleunigers für Epoxid-Präpolymere, insbesondere eines Addukts von Aminoverbindungen an Epoxidharze,
v) 0,005 bis 5 Gew.-%, vorzugsweise 0,02 bis 0,25 Gew.-% Härtungsbeschleuniger für Isocyanate wie weiter oben beschrieben, insbesondere Dibutylzinndilaurat.

Vorzugsweise wählt man das Mischungsverhältnis von bei einer Temperatur von maximal 100 °C unter Normaldruck flüssigen zu unter diesen Bedingungen festen Bestandteilen der beiden Komponenten derart, dass sowohl die Komponente A als auch die Komponente B bei einer Temperatur von höchstens 100 °C, insbesondere von höchstens 80 °C eine solche Viskosität aufweist, dass sie pumpbar ist, insbesondere mit üblichen Verdrängerpumpen wie Kolben- oder Schlauchpumpen. Komponenten werden erfindungsgemäß als "pumpbar" bezeichnet, wenn sie bei einem Applikationsdruck von 0 bis 300bar, bevorzugt 5 bis 150bar und einer Düsenöffnung von 80mm² einen Fluss von 10g/min bis 10kg/min, vorzugsweise 50g/min bis 5kg/min ermöglichen. Diese Eigenschaft erleichtert die weitere erfindungsgemäße Verarbeitung der beiden Komponenten. Als "pumpbar" werden insbesondere Komponenten bezeichnet, die bei der Applikationstemperatur eine Viskosität von 0,01 bis 1000 Pa*s (Messbedingungen: Rotationsrheometer mit Platte-Platte-Geometrie (PP20), Scherrate 100/s, Schichtdicke des Materials 0,2mm) aufweisen.

Ganz besonders bevorzugt sind erfindungsgemäß Zubereitungen, die "pumpbar" in dem Sinne sind, dass sie bei 25°C und einem Pumpendruck von 6bar einen Fluss von mindestens 10g/min, vorzugsweise von 10g/min bis 10kg/min, ganz bevorzugt von 50g/min bis 5kg/min aufweisen, wenn sie aus einer vollständig gefüllten, handelsüblichen Aluminiumdüsenkartusche mit einem Fassungsvolumen von 310ml und einem Innendurchmesser von 46mm, deren Austrittsöffnung mit Hilfe eines Kartuschenanstechers mit einem Außendurchmesser von 9mm geöffnet wurde, ohne Aufsatz einer Düse bei einer Temperatur von 25°C (nach 45Minuten Vortemperierung) und einem Druck von 6bar ausgebracht werden. Der Fluss gibt die Masse an Zubereitung an, die innerhalb von 1 Minute ausgebracht werden kann und wird dementsprechend in g/min angegeben.

Ein zweiter Gegenstand der vorliegenden Anmeldung ist ein thermisch härtbarer 1-Komponentenepoxidklebstoff, der durch Mischung der Komponenten A und B gemäß der oben beschriebenen Zweikomponentenmittel sowie Vorhärtung bei einer Temperatur von 5 bis 100°C erhalten werden kann.

Bezüglich der Details der bevorzugten Bestandteile der Komponenten A und B gilt mutatis mutandis das zu den erfindungsgemäßen Zweikomponentenmitteln Gesagte.

Die Mischung der beiden Komponenten A und B erfolgt üblicherweise unmittelbar vor der Applikation des Epoxidklebstoffs auf mindestens eine der beiden Klebeflächen der zu fügenden Bauteile.

Unter "unmittelbar vor der Applikation" wird erfindungsgemäß verstanden, dass zwischen Mischung der Komponenten und Auftrag des resultierenden Klebstoffs auf mindestens eine Klebefläche ein Zeitraum von weniger als 60 Minuten, vorzugsweise von 0,01 Sekunde bis 5 Minuten, liegt.

Beispielsweise können die beiden Komponenten mit Pumpen aus Vorratsgefäßen gefördert werden, über einen Statikmischer oder einen dynamischen Mischer vermischt werden und aus dem Mischer auf mindestens eine der Klebeflächen der zu fügenden Bauteile appliziert werden. Dabei können mehrere Bauteile vorgelegt werden, auf deren Klebeflächen nacheinander oder gleichzeitig (wenn mehrere Mischer vorgesehen werden) die resultierende Anwendungszubereitung aufgetragen werden.

Nach dem Vermischen sowie der Applikation baut sich innerhalb der resultierenden Anwendungszubereitung rasch Formstabilität durch die Reaktion der Isocyanatgruppen mit den reaktiven -OH- und/oder -SH-Gruppen auf. Die hierfür erforderliche Zeit hängt von der Temperatur ab und kann beispielsweise im Bereich von etwa 1 Minute bis etwa 48 Stunden liegen, Vorhärtungszeiten von 5 Minuten bis zu 1 Stunde sind erfindungsgemäß bevorzugt. Zusammensetzungen, die nach einer Erwärmung für einen Zeitraum von 10 bis 20 Minuten auf eine Temperatur von 80 °C bei 22°C formstabile Massen ergeben, sind erfindungsgemäß bevorzugt.

Eine Masse wird erfindungsgemäß als "formstabil" bezeichnet, wenn die Geometrie dieser Masse sich bei der angegebenen Temperatur innerhalb von 1 Stunde nicht unter dem Einfluss der Schwerkraft verformt.

Eine Verformung unter Druck ist jedoch möglich und kann sogar das in-Kontakt-Bringen mit den zu fügenden Bauteilen erleichtern.
Durch die Verwendung von Komponenten A und B, die erst nach deren Vermischen andicken, ist es erfindungsgemäß möglich, eine einfache 2-Komponenten-Pumpanlage anstelle der aufwändigeren Spritzgussanlage zu verwenden, die üblicherweise für die Auftragung schlagzäh-modifizierter Klebstoffe eingesetzt werden muss.

Es hat sich erfindungsgemäß als besonders bevorzugt erwiesen, wenn die Komponenten A und B in einem Mischungsverhältnis von 10:1 bis 1:10 Gewichtsteilen, vorzugsweise von 4:1 bis 1:4 Gewichtsteilen miteinander vermischt werden. Insbesondere für die Applikation aus 2-Kammerkartuschen hat sich ein Mischungsverhältnis von 1:1, 1:2 oder 1:4 Gewichtsteilen als besonders geeignet erwiesen.

Die Vorhärtung erfolgt in einem Temperaturbereich von 5°C bis zu 100°C. Es kann erfindungsgemäß bevorzugt sein, wenn die Vorhärtung im Bereich von 20°C bis 75°C stattfindet.

Dabei kann es in einer Ausführungsform erfindungsgemäß bevorzugt sein, die resultierende Anwendungszubereitung einfach bei Umgebungstemperatur zu belassen, bis die Spontanreaktion zwischen den Isocyanatgruppen und den Hydroxy beziehungsweise Thiolgruppen abgeschlossen ist.

Im Rahmen einer anderen ebenfalls bevorzugten Ausführungsform kann es aber auch bevorzugt sein, aktiv Wärme zu applizieren. Dies kann beispielsweise durch Einbringung des Klebstoffs in einen Ofen, durch Bestrahlung mit IR-Strahlung, Wärmestrahlung durch ein Heizgebläse, elektrische Erwärmung der Fügeteile (elektrischer Widerstand), in die Klebeschicht integrierte Heizdrähte oder auch durch Erhitzung des Bauteils im Bereich der Klebeflächen mittels Induktion erfolgen.

Erfindungsgemäß hat es sich als besonders vorteilhaft erwiesen, wenn der thermisch-härtbare 1-Komponentenklebstoff in Form einer Klebstoffraupe ausgebildet ist.
Unter einer "Raupe" wird erfindungsgemäß ein dreidimensionaler Klebstoffauftrag mit einem beliebigen, beispielsweise drei-, recht- oder vieleckigen Querschnitt verstanden, vorzugsweise jedoch einem ovalen bis kreisförmigen Querschnitt, bei einem Auftrag auf ein Substrat insbesondere ein durch die Substratoberfläche bedingter ovalsegmentförmiger beziehungsweise kreissegmentförmiger Querschnitt. Dieser Querschnitt kann dabei insbesondere von der Wahl des Auftragswerkzeugs, wie beispielsweise der Öffnungsgeometrie einer Auftragsdüse abhängen und/oder von einem auf den Klebstoff einwirkenden Druck, mit dem der Klebstoff ausgebracht wird und/oder auch anderen Einflussgrößen wie beispielsweise die Temperatur des Klebstoffes selbst und/oder die Umgebungstemperatur und/oder die Luftfeuchtigkeit. Eine Raupe besitzt dabei einen Durchmesser, wobei im Sinne der vorliegenden Erfindung unter dem Durchmesser eine sich im Wesentlichen parallel zum Substrat über den Querschnitt erstreckende Breite oder Stärke des Klebstoffes verstanden werden kann. In Auftragsrichtung kann die Ausdehnung des Klebstoffes kleiner als dieser Durchmesser der Raupe sein. Denkbar ist hier auch eine Ausdehnung in Auftragsrichtung, die dem Durchmesser der Raupe entspricht (punktueller oder kugelförmiger Auftrag) oder die ein mehr- oder vielfaches des Durchmessers entspricht (Klebsstoffstrang). Auch ist es ferner denkbar, dass die Raupe einen Hohlraum aufweist, also ein Hohlraum von Klebstoff zumindest bereichsweise umschlossen wird oder dass der Klebstoff sich teilweise überlappt, die Raupe also gefaltet ist.

Ein dritter Gegenstand der vorliegenden Erfindung betrifft ein Verfahren zur Herstellung eines thermisch härtbaren 1-Komponentenklebstoffs, bei dem die Komponenten A und B eines erfindungsgemäßen Zweikomponentenmittels miteinander vermischt und bei einer Temperatur im Bereich von 5°C bis 100 °C vorgehärtet werden.

Bezüglich der Details der bevorzugten Bestandteile der Komponenten A und B gilt mutatis mutandis das zu den erfindungsgemäßen Zweikomponentenmitteln Gesagte.

Bezüglich der Details des Mischens sowie Vorhärtens gilt mutatis mutandis das zu dem erfindungsgemäßen thermisch-härtbare 1-Komponentenklebstoff Gesagte.

Ein vierter Gegenstand der vorliegenden Erfindung ist ein Fahrzeug oder Bauteil, bestehend aus mindestens 2 Bestandteilen, die mit einem erfindungsgemäßen thermisch härtbaren 1-Komponentenklebstoff verklebt wurden.

Dabei zeichnet sich die vorliegende Erfindung durch ihre Anwendbarkeit auf einer Vielzahl von Materialien aus. Obwohl die Verklebung von metallischen Bauteilen, wie beispielsweise Stahl, Aluminium ggf. mit Scandiumzusatz oder Titan, erfindungsgemäß bevorzugt ist, können selbstverständlich auch Bauteile aus Holz, Keramik, Kunststoffen, Faserverbundwerkstoffen, wie beispielsweise Kohlefaserverstärkte Kunststoffe oder Aramidfaserverstärkte Kunststoffe, oder Ferriten mithilfe des erfindungsgemäßen Klebemittels miteinander verklebt werden. Obwohl es prinzipiell denkbar ist, wenn die zu fügenden Teile aus dem gleichen Material bestehen, konnten im Rahmen der vorliegenden Erfindung auch sehr gute Erfolge bei der Verklebung von Bauteilen aus unterschiedlichen Materialien erzielt werden.

Bezüglich der Details dieses Gegenstandes der vorliegenden Erfindung gilt mutatis mutandis das zu den anderen Gegenständen bereits Gesagte.

Im Rahmen dieses Gegenstandes der vorliegenden Erfindung hat es sich als wesentlich erwiesen, dass der thermisch härtbare 1-Komponentenklebstoff nach der durchgeführten Vorhärtung bereits eine Anfangshaftung aufweist, so dass ein Zusammenhalt der Bauteile bereits gewährleistet ist. Es hat sich erfindungsgemäß als vorteilhaft erwiesen, wenn bereits nach der Vorhärtung auf den Einsatz weitere mechanischer Fixierungen der zu fügenden Bauteile, wie beispielsweise eine Schraubzwinge oder Schweißpunkte verzichtet werden kann.

Ein fünfter Gegenstand der vorliegenden Erfindung ist ein Verfahren zur Fügung von mindestens zwei Bestandteilen eines Fahrzeugs oder Bauteils, bei dem
(a) die Komponenten A und B eines Mittels eine erfindungsgemäßen Zweikomponentenmittels unmittelbar vor der Anwendung miteinander gemischt werden,
(b) die resultierende Anwendungszubereitung auf die Klebefläche mindestens eines der zu fügenden Bestandteile aufgetragen wird und dort bei einer Temperatur von 5°C bis 100°C vorgehärtet wird,
(c) abschließend die endgültige Härtung der Anwendungszubereitung bei Temperaturen von 120° bis 240°C durchgeführt wird,
wobei die Klebeflächen der zu fügenden Bestandteile vor oder nach der Vorhärtung der Anwendungszubereitung in Schritt (b) in der Fügeposition mit dem Klebstoff in Kontakt gebracht werden.

Bezüglich der Details dieses Gegenstandes der vorliegenden Erfindung gilt mutatis mutandis das zu den anderen Gegenständen bereits Gesagte.

Unter "Fügeposition" wird erfindungsgemäß die geometrische Anordnung der Bestandteile des Fahrzeugs und/oder Bauteils sowie des Klebstoffs verstanden, in der die Teile sich nach der endgültigen Härtung befinden müssen, um ihre beabsichtige Funktion zu erfüllen.

In einer ersten bevorzugten Ausführungsform dieses erfindungsgemäßen Gegenstandes hat es sich als vorteilhaft erwiesen, wenn die Klebeflächen der zu fügenden Bestandteile vor der Vorhärtung der Anwendungszubereitung in Schritt (b) in der Fügeposition mit dem Klebstoff in Kontakt gebracht werden und der vorgehärtete Klebstoff die Bauteile nach Schritt (b) miteinander verbindet.

Hierbei ist es erfindungsgemäß wesentlich, dass der thermisch härtbare 1-Komponentenklebstoff nach der durchgeführten Vorhärtung bereits eine Anfangshaftung aufweist, so dass ein Zusammenhalt der Bauteile bereits gewährleistet ist. Es hat sich erfindungsgemäß als vorteilhaft erwiesen, wenn bereits nach der Vorhärtung auf den Einsatz weitere mechanischer Fixierungen der zu fügenden Bauteile, wie beispielsweise eine Schraubzwinge oder Schweißpunkte verzichtet werden kann.

In einer zweiten bevorzugten Ausführungsform dieses erfindungsgemäßen Gegenstandes hat es sich als vorteilhaft erwiesen, wenn die Klebeflächen der zu fügenden Bestandteile erst unmittelbar vor Verfahrensschritt c) in der Fügeposition mit dem Klebstoff in Kontakt gebracht werden.

Unter "unmittelbar vor Verfahrensschritt c)" wird erfindungsgemäß vorzugsweise verstanden, dass zwischen dem In-Kontakt-Bringen der zu fügenden Bestandteile und dem Verfahrensschritt c) ein Zeitraum von weniger als 1 Tag, vorzugsweise von 0,01 Sekunden bis 180 Minuten, liegt.

In dieser Ausführungsform wird die resultierende Anwendungszubereitung in Schritt (b) zunächst nur auf die Klebefläche eines der zu fügenden Bestandteile appliziert und dort vorgehärtet. Dieser Schritt muss nicht im Rahmen der Endfertigung des resultierenden Fahrzeugs oder Bauteils erfolgen, sondern kann bereits im Rahmen der Teilefertigung, beispielsweise eines Zulieferbetriebes erfolgen.

Es hat sich als vorteilhaft erwiesen, wenn in dieser Ausgestaltungsform die vorgehärtete Klebstoffzubereitung unterhalb von 45°C keine oder eine nur geringe Haftung aufweist, so dass die beschichteten Bauteile problemlos gestapelt, gelagert und transportiert werden können.

Daher ist es erfindungsgemäß bevorzugt, wenn die zu fügenden Bestandteile nach dem Schritt (b) für einen beliebigen Zeitraum zwischengelagert und gegebenenfalls transportiert werden.

Der Zeitraum zwischen den Anwendungsschritten (b) und (c) kann erfindungsgemäß bevorzugt einige Minuten bis zu mehreren Monaten betragen, beispielsweise 1 Minute bis 6 Monate.

Unabhängig vom Zeitpunkt des in-Kontakt-Bringens der zu fügenden Bestandteile mit dem Klebemittel in der endgültigen Fügeposition erfolgt die endgültige Aushärtung durch Erhitzung des Klebebereichs auf Temperaturen von 120° C bis 240°C. Dies kann in einem separaten Schritt der Fertigung erfolgen; es hat sich aber als vorteilhaft erwiesen, wenn die Endhärtung in einen Fertigungsschritt des Fahrzeugs oder Bauteils, wie beispielsweise die Pulverlackbeschichtung, integriert werden kann.

### Ausführungsbeispiele

Die Mengenangaben in den Beispielen verstehen sich, sofern nichts anderes vermerkt ist, in Gewichtsprozent bezogen auf die jeweilige Komponente.

### 1 Rezepturen

| | Beispiel I* | Beispiel II | Beispiel III | Beispiel IV* | Beispiel V* | Beispiel VI* | Beispiel VII |
|---|---|---|---|---|---|---|---|
| Komponente A | | | | | | | |
| Epon^{®} 828 | 0,0 | 65,0 | 35,0 | 70,0 | 70,0 | 0,0 | 95,3 |
| Kane Ace^{®} MX-153 | 0,0 | 0,0 | 30,0 | 30,0 | 30,0 | 0,0 | 0,0 |
| Desmodur^{®} XP2599 | 0,0 | 35,0 | 35,0 | 0,0 | 0,0 | 0,0 | 0,0 |
| Desmodur^{®} VL R10 | 0,0 | 0,0 | 0,0 | 0,0 | 0,0 | 0,0 | 4,7 |

| Komponente B | | | | | | | |
|---|---|---|---|---|---|---|---|
| Epon^{®} 828 | 88,1 | 76,9 | 77,8 | 79,0 | 43,0 | 70,0 | 46,6 |
| PEG 200 | 0,0 | 5,0 | 5,0 | 0,0 | 0,0 | 0,0 | 0,0 |
| Terathane^{®} 2000 | 0,0 | 0,0 | 0,0 | 0,0 | 0,0 | 0,0 | 35,3 |
| Flexibilizer^{®} DY965 | 0,0 | 0,0 | 0,0 | 0,0 | 40,0 | 20,0 | 0,0 |
| Ajicure^{®} PN50 | 2,0 | 2,0 | 2,0 | 2,0 | 2,0 | 2,0 | 2,0 |
| Dicyandiamid | 9,9 | 15,9 | 15,0 | 19,0 | 15,0 | 8,0 | 15,9 |
| Dibutylzinnlaurat | 0,0 | 0,2 | 0,2 | 0,0 | 0,0 | 0,0 | 0,2 |
| Mischungsverhältnis A:B [Gewichtsteile] | - | 1:1 | 1:1 | 1:1 | 1:1 | - | 1:1 |
| Gehalt an PUR-Toughener [Gew.% der Endzubereitung] | 0 | 20 | 20 | 0 | 20 | 20 | 20 |
| Kennwerte | | | | | | | |
| Elastizitätsmodul nach Endhärtung [MPa] | 3300 | 2200 | 1800 | 2700 | 1850 | 1850 | n.b. |
| Bruchdehnung nach Endhärtung [%] | 5,0 | 10,1 | 35 | 3,7 | 6,4 | 8,3 | n.b. |
| Schlagschälfestig keit nach Endhärtung,22°C [N/mm] | 3,4 | 24 | 25,5 | 6,2 | 45,5 | 27,5 | 27,8 |

### 2 Herstellung der Zubereitungen

Die oben genannten Bestandteile der Komponenten A und B wurden jeweils bei 23°C in einem Planetenmischer miteinander vermischt. Die produzierten Komponenten A und B wurden in abgedichtete Behältnisse abgefüllt und bei 22°C aufbewahrt. Die Mischung der Komponten A und B erfolgte jeweils in einem separaten Behältnis bei 22°C in den oben genannten Mischungsverhältnissen.

Die mit einen * gekennzeichneten Beispiele I, IV, V und VI sind nicht erfindungsgemäß

### 3 Herstellung und Vermessung der Prüfkörper

### 3.1 E-Modul/Bruchdehnung

Die Ermittlung des E-Moduls und der Bruchdehnung der einzelnen Beispielsrezepturen erfolgte mittels so genannter "Dogbone"-Prüfkörper gemäß DIN EN ISO 527-1/-2 mit Prüfkörpern des Typs 5A. Um die hierfür benötigten Substanzproben herzustellen, wurden die Komponenten A und B nach dem Vermischen in eine Form mit einer quadratischen Grundfläche und einer Höhe von 2mm frei von Luftblasen und Einschlüssen appliziert.

Sämtliche Proben wurden in der Form für 20min auf 80°C erhitzt, wobei bei den erfindungsgemäßen Mischungen der Beispiele II, III und VII die Vorhärtungsreaktion stattfindet.

Nach dieser Vorhärtung/Lagerung wurden die jeweiligen Massen in der beschriebenen Form für 30min bei 180°C in einem Autoklaven final gehärtet. Die so erhaltenen 2mm dicken Platten der vollständig gehärteten Massen wurden aus der Form entnommen, und die zur Messung benötigten Prüfkörper des Typs 5A ausgefräst. Nach einer Konditionierung der Prüfkörper für mindestens 24h bei 22°C wurden die E-Moduls und die Bruchdehnung gemäß DIN EN ISO 527-1/-2 bestimmt.

### 3.2 Schlagschälfestigkeit

Zur Herstellung der Prüfkörper zur Messung der Schlagschälfestigkeit wurden die Komponenten A und B nach dem Vermischen auf jeweils eines der vorab sandgestrahlten und dann mit Ethylacetat gereinigten Fügeteile (unverzinkter Stahl (Qualität: DC06, CRS) mit einer Schichtdicke von 0,8mm) appliziert und dort flächig auf der zu verklebenden Fläche ausgestrichen. Danach wurde die jeweilige Klebeschicht mit einem zweiten gleichbeschaffenen Fügeteil bedeckt und zum Prüfkörper zusammengestellt. Zur Einstellung der Klebschichtdicke von 0,2mm wurden vor dem Aufbringen des zweiten Fügeteils geringe Mengen Glaskugeln mit einem Durchmesser von 0,2mm auf die Masse aufgebracht. Die zusammengestellten Prüfkörper wurden mit Klammern fixiert. Die mit dem Klebstoff versehenen Prüfkörper wurden für 20min bei 80°C in einem Wärmeschrank gelagert; während dessen erfolgte bei den Proben der Beispiele II, III und VII die Vorhärtung ein. Die Endhärtung erfolgte anschließend analog für 30min bei 180°C in einem Wärmeschrank. Nach erfolgter Endhärtung wurden die Prüfkörper für 24h bei 22°C konditioniert und zuletzt zur Bestimmung der Schlagschälfestigkeit verwendet.

### 4 Verzeichnis der eingesetzten Rohstoffe:

- Ajicure^{®} PN50: Aminaddukt an Epoxidharz; latenter Härter und Beschleuniger für Epoxidharze; Hersteller Ajinomoto
- Desmodur^{®} VL R10: Aromatisches Polyisocyanat auf Basis von Diphenylmethandiisocyanat, Äquivalenzgewicht 133g/eq, Hersteller Bayer
- Desmodur^{®} XP2599: Apliphatisches Polyisocyanat-Präpolymer, bei Raumtemperatur flüssig; Hersteller Bayer
- Epon^{®} 828: Reaktionsprodukt von Epichlorhydrin mit Bisphenol A; bei Raumtemperatur flüssig; EEW 184-190g/eq; Hersteller Hexion
- Flexibilizer^{®} DY965: Polyurethan-Polyol mit weniger als 14Gew.-% 4,4'-(1-methylethylidene)bis[2-(2-propen-1-yl)- Phenol; Schlagzähigkeits-modifikator; Hersteller Huntsman
- Kane Ace^{®} MX-153: Mischung aus Epoxidharz auf Bisphenol-A-Basis (EEW ca. 270g/eq) und ca. 33Gew.-% Core-Shell-Rubber (Butadien-Acryl-Copolymer)
- Terathane^{®} 2000: Polytetrahydrofuran, Schmelzpunkt 26-30°C; Hersteller Invista

### 5 Zusammenfassung

Die Messwerte zeigen deutlich, dass die erfindungsgemäßen Zubereitungen II und III, bei denen das Polyurethan in-situ gebildet wurde, im Vergleich zu dem unmodifizierten System aus Beispiel I, zwar einen kleineren E-Modul, andererseits aber eine deutlich größere Zugdehnung aufweisen. Diese Proben sind also deutlich nachgiebiger als die Vergleichsproben aus Beispiel I.
Beispiel III zeigt ferner, dass der positive Einfluss auf die Bruchdehnung des in-situ gebildeten Polyurethannetzwerks durch die Kombination mit so genannten Core-Shell Rubber Partikeln im Vergleich zu den jeweils nur eine der Komponenten enthaltenden Mischungen II und IV weiter verbessert werden kann. Der Vergleich der Zugdehnungen der Beispiele II und III (PU in-situ gebildet) mit den Beispielen V und VI (konventioneller Schlagzähigkeitsmodifizierer) zeigt, dass sich durch das in-situ gebildete Polyurethannetzwerk auch im Vergleich zu konventionell schlagzähmodifizierten Mischungen eine deutlich höhere Bruchdehnung erzielen lässt.

Der bei den Beispielen II und III ermittelte E-Modul ist dabei vergleichbar mit den E-Moduli, die in den konventionell schlagzähmodifizierten Beispielen V und VI gefunden werden.

Weiterhin zeichnen sich die erfindungsgemäß hergestellten Proben der Beispiele II, III und VII durch eine größere Schlagschälfestigkeit bei Raumtemperatur aus als die Vergleichsproben aus Beispiel I.
Die Schlagschälfestigkeit kann dabei sowohl durch den alleinigen Einsatz des in-situ gebildeten Polyurethans (Beispiele II und VII), als auch durch dessen Kombination mit Core-Shell Rubber Partikeln (Beispiel III), nicht jedoch durch den alleinigen Einsatz von Core-Shell Rubber Partikeln (Beispiel IV), erhöht werden.
Der Vergleich der Beispiele II, VI und VII zeigt zudem, dass bei alleinigem Einsatz des in-situ gebildeten Polyurethannetzwerks (Beispiele II und VII) vergleichbare Ergebnisse für die Schlagschälfestigkeit erreicht werden können, wie bei alleinigem Einsatz eines konventionellen Schlagzähigkeitsmodifikators (Beispiel VI).

## Patentansprüche

1. Mittel zur Herstellung eines schlagzähmodifizierten Epoxidklebstoffs umfassend zumindest zwei getrennt voneinander konfektionierte Komponenten A und B, wobei
(a) die Komponente A mindestens eine Verbindung mit zwei oder mehreren Isocyanat-Gruppen sowie ein oder mehrere weitere Additive enthält,
(b) die Komponente B
mindestens eine Verbindung, die mindestens zwei reaktive Gruppen, ausgewählt aus Hydroxygruppen und Thiolgruppenaufweist und gleichzeitig frei von Epoxygruppen ist, sowie ein oder mehrere weitere Additive
enthält,
(c) mindestens eine der Komponenten A und/oder B als Additiv mindestens ein Epoxid-Präpolymer enthält, das bei 22 °C flüssig ist.
(d) mindestens eine der Komponenten A und/oder B als Additiv mindestens einen latenten Härter für Epoxid-Präpolymere enthält, und
(e) die Komponenten A und B kein thermisch aktivierbares Treibmittel enthalten.

2. Mittel nach Anspruch 1, **dadurch gekennzeichnet, dass** die mindestens eine Verbindung, die mindestens zwei reaktive Gruppen, ausgewählt aus Hydroxygruppen und Thiolgruppen,aufweist und gleichzeitig frei von Epoxygruppen ist, eine Polyetherstruktur aufweist oder ausgewählt ist aus der Gruppe der Alkyldiole.

3. Mittel nach einem der Ansprüche 1 oder 2, **dadurch gekennzeichnet, dass** die mindestens eine Verbindung, die mindestens zwei reaktive Gruppen, ausgewählt aus Hydroxygruppen und Thiolgruppen, aufweist und gleichzeitig frei von Epoxygruppen ist, ein Polyol ist.

4. Mittel nach einem der Ansprüche 1 bis 3, **dadurch gekennzeichnet, dass** die mindestens eine Verbindung mit zwei oder mehreren Isocyanat-Gruppen eine Polyetherstruktur aufweist.

5. Mittel nach einem der Ansprüche 1 bis 4, **dadurch gekennzeichnet, dass** sowohl die Komponente A als auch die Komponente B als Additiv mindestens ein Epoxid-Präpolymer enthält, das bei 22 °C flüssig ist.

6. Thermisch härtbarer 1-Komponentenepoxidklebstoff, **dadurch gekennzeichnet, dass** er durch Mischung der Komponenten A und B gemäß einem der Ansprüche 1 bis 5 sowie Vorhärtung bei einer Temperatur von 5 bis 100°C erhalten werden kann.

7. Verfahren zur Herstellung eines thermisch härtbaren 1-Komponentenklebstoffs, **dadurch gekennzeichnet, dass** die Komponenten A und B gemäß einem der Ansprüche 1 bis 5 miteinander vermischt und bei einer Temperatur im Bereich von 5°C bis 100 °C vorgehärtet werden.

8. Fahrzeug oder Bauteil, bestehend aus mindestens 2 Bestandteilen, die mit einem thermisch härtbaren 1-Komponentenklebstoff gemäß Anspruch 6 verklebt wurden.

9. Verfahren zur Fügung von mindestens zwei Bestandteilen eines Fahrzeugs oder Bauteils, **dadurch gekennzeichnet, dass**
(a) die Komponenten A und B eines Mittels gemäß einem der Ansprüche 1 bis 5 unmittelbar vor der Anwendung miteinander gemischt werden,
(b) die resultierende Anwendungszubereitung auf die Klebefläche mindestens eines der zu fügenden Bestandteile aufgetragen wird und dort bei einer Temperatur von 5°C bis 100°C vorgehärtet wird,
(c) abschließend die endgültige Härtung der Anwendungszubereitung bei Temperaturen von 120° bis 240°C durchgeführt wird,
wobei die Klebeflächen der zu fügenden Bestandteile vor oder nach der Vorhärtung der Anwendungszubereitung in Schritt (b) in der Fügeposition mit dem Klebstoff in Kontakt gebracht werden.

10. Verfahren nach Anspruch 9, **dadurch gekennzeichnet, dass** die Klebeflächen der zu fügenden Bestandteile vor der Vorhärtung der Anwendungszubereitung in Schritt (b) in der Fügeposition mit dem Klebstoff in Kontakt gebracht werden und der vorgehärtete Klebstoff die Bauteile nach Schritt (b) miteinander verbindet.

11. Verfahren nach Anspruch 9, **dadurch gekennzeichnet, dass** die Klebeflächen der zu fügenden Bestandteile erst unmittelbar vor Verfahrensschritt c) in der Fügeposition mit dem Klebstoff in Kontakt gebracht werden.

12. Verfahren nach einem der Ansprüche 9 bis 11, **dadurch gekennzeichnet, dass** die zu fügenden Bestandteile nach dem Schritt (b) für einen beliebigen Zeitraum zwischengelagert und gegebenenfalls transportiert werden.

13. Verfahren nach einem der Ansprüche 9 bis 12, **dadurch gekennzeichnet, dass** zwischen den Anwendungsschritten (b) und (c) ein Zeitraum von einigen Minuten bis zu mehreren Monaten liegt.

## Claims

1. An agent for producing an impact-modified epoxide adhesive comprising at least two components A and B packaged separately from each other, wherein
(a) component A contains at least one compound having two or more isocyanate groups and one or more further additives,
(b) component B contains at least one compound which has at least two reactive groups selected from hydroxy groups and thiol groups and which is simultaneously free from epoxy groups, and one or more further additives,
(c) at least one of components A and/or B contains at least one epoxide prepolymer which is liquid at 22°C as an additive,
(d) at least one of components A and/or B contains at least one latent curing agent for epoxide prepolymers as an additive, and
(e) components A and B contain no blowing agent that is capable of being heat-activated.

2. The agent according to claim 1, **characterized in that** the at least one compound which has at least two reactive groups selected from hydroxy groups and thiol groups and which is simultaneously free from epoxy groups has a polyether structure or is selected from the group of alkyl diols.

3. The agent according to one of claims 1 or 2, **characterized in that** the at least one compound which has at least two reactive groups selected from hydroxy groups and thiol groups and which is simultaneously free from epoxy groups is a polyol.

4. The agent according to one of claims 1 to 3, **characterized in that** the at least one compound having two or more isocyanate groups has a polyether structure.

5. The agent according to one of claims 1 to 4, **characterized in that** both component A and component B contain at least one epoxide prepolymer which is liquid at 22°C as an additive.

6. A heat-curable one-component epoxide adhesive, **characterized in that** it is formed by mixing components A and B according to one of claims 1 to 5 and by pre-curing at a temperature of from 5 to 100°C.

7. A method for producing a heat-curable one-component adhesive, **characterized in that** components A and B according to one of claims 1 to 5 are mixed together and pre-cured at a temperature in the range of from 5 to 100°C.

8. A vehicle or structural element consisting of at least two constituents, which have been bonded together by means of a heat-curable one-component adhesive according to claim 6.

9. A method for joining at least two constituents of a vehicle or structural element, **characterized in that**:
(a) components A and B of an agent according to one of claims 1 to 5 are mixed together immediately before application,
(b) the resulting application preparation is applied to the bonding surfaces of at least one of the constituents to be joined and is pre-cured at a temperature of from 5 to 100°C,
(c) final curing of the application preparation is then performed at temperatures of from 120 to 240°C,
the bonding surfaces of the constituents to be joined being brought into contact with the adhesive in the joining position before or after pre-curing of the application preparation in step (b).

10. The method according to claim 9, **characterized in that** the bonding surfaces of the constituents to be joined are brought into contact with the adhesive in the joining position before pre-curing of the application preparation in step (b) and the pre-cured adhesive bonds the structural elements together after step (b).

11. The method according to claim 9, **characterized in that** the bonding surfaces of the constituents to be joined are brought into contact with the adhesive in the joining position only immediately before method step (c).

12. The method according to one of claims 9 to 11, **characterized in that** the constituents to be joined are temporarily stored for a discretionary period after step (b) and optionally transported.

13. The method according to one of claims 9 to 12, **characterized in that** there is a period ranging from a few minutes to several months between application steps (b) and (c).

## Revendications

1. Agent, destiné à la production d'un adhésif époxy à résilience modifiée, comprenant au moins deux composants A et B préparés séparément,
(a) le composant A contenant au moins un composé, pourvu de deux groupes isocyanate ou plus, et un ou plusieurs autres additifs,
(b) le composant B contenant au moins un composé, qui comporte au moins deux groupes réactifs choisis parmi les groupes hydroxyle et les groupes Thiol et qui est en même temps exempt de groupes époxy, et un ou plusieurs autres additifs,
(c) au moins un des composants A et/ou B contenant comme additif au moins un prépolymère époxy qui est liquide à 22°C,
(d) au moins un des composants A et/ou B contenant comme additif au moins un durcisseur latent pour prépolymères époxy et
(e) les composants A et B ne contiennent pas d'agent gonflant activable thermiquement.

2. Agent selon la revendication 1, **caractérisé en ce que** l'au moins un composé, qui comporte au moins deux groupes réactifs choisis parmi les groupes hydroxyle et les groupes Thiol et qui est en même temps exempt de groupes époxy, comporte une structure de polyéther ou est choisi dans le groupe des diols d'alkyle.

3. Agent selon l'une des revendications 1 ou 2, **caractérisé en ce que** l'au moins un composé, qui comporte au moins deux groupes réactifs choisis parmi les groupes hydroxyle et les groupes thiol et qui est en même temps exempt de groupes époxy, est un polyol.

4. Agent selon l'une des revendications 1 à 3, **caractérisé en ce que** l'au moins un composé pourvu de deux ou groupes isocyanate ou plus comporte une structure de polyéther.

5. Agent selon l'une des revendications 1 à 4, **caractérisé en ce que** le composant A et le composant B contient comme additif au moins un prépolymère époxy qui est liquide à 22°C.

6. Adhésif époxy mono-composant durcissable thermiquement, **caractérisé en ce qu'**il peut être obtenu par mélange des composants A et B selon l'une des revendications 1 à 5 et par pré-durcissement à une température de 5 à 100°C.

7. Procédé de production d'un adhésif mono-composant durcissable thermiquement, **caractérisé en ce que** les composants A et B selon l'une des revendications 1 à 5 sont mélangés ensemble et sont pré-durcis à une température dans la gamme de 5°C à 100°C.

8. Véhicule ou élément structurel, constitué d'au moins deux composants qui ont été collés avec une colle mono-composant durcissable thermiquement selon la revendication 6.

9. Procédé d'assemblage d'au moins deux composants d'un véhicule ou d'un élément structurel, **caractérisé en ce que**
(a) les composants A et B d'un agent selon l'une des revendications 1 à 5 sont mélangés ensemble immédiatement avant l'utilisation,
(b) la préparation d'application résultante est appliquée sur la surface adhésive d'au moins un des composants à assembler et est pré-durcie à une température de 5°C à 100°C,
(c) enfin le durcissement final de la préparation d'application est réalisé à des températures de 120°C à 240°C,
les surfaces adhésives des composants à assembler étant mises en contact avec l'adhésif dans la position d'assemblage avant ou après le pré-durcissement de la préparation d'application à l'étape (b).

10. Procédé selon la revendication 9, **caractérisé en ce que** les surfaces adhésives des composants à assembler sont mises en contact dans la position d'assemblage avec l'adhésif avant le pré-durcissement de la préparation d'application à l'étape (b) et l'adhésif pré-durci relie les composants entre eux après l'étape (b).

11. Procédé selon la revendication 9, **caractérisé en ce que** les surfaces adhésives des composants à assembler sont mis en contact avec l'adhésif dans la position d'assemblage immédiatement avant l'étape de procédé c).

12. Procédé selon l'une des revendications 9 à 11, **caractérisé en ce que** les composants à assembler sont stockés temporairement et éventuellement transportés après l'étape (b) pendant une durée quelconque.

13. Procédé selon l'une des revendications 9 à 12, **caractérisé en ce que** les étapes d'application (b) et (c) sont espacé de quelques minutes à plusieurs mois.
